Europäisches Patentamt

European Patent Office

Office européen des brevets

(19)

(11) Veröffentlichungsnummer: **0 160 945 B1**

(12) **EUROPÄISCHE PATENTSCHRIFT**

(45) Veröffentlichungstag der Patentschrift: **27.11.91**

(51) Int. Cl.⁵: **G01N 1/20**

(21) Anmeldenummer: **85105414.8**

(22) Anmeldetag: **03.05.85**

(54) **Vorrichtung zur Probenteilung von Schüttgütern und Suspensionen.**

(30) Priorität: **04.05.84 DE 3416595**

(43) Veröffentlichungstag der Anmeldung:
**13.11.85 Patentblatt 85/46**

(45) Bekanntmachung des Hinweises auf die
Patenterteilung:
**27.11.91 Patentblatt 91/48**

(84) Benannte Vertragsstaaten:
**AT BE CH DE FR GB IT LI LU NL SE**

(56) Entgegenhaltungen:
**DE-A- 2 057 369**
**DE-B- 1 034 886**
**DE-C- 602 859**
**DE-C- 815 112**

(73) Patentinhaber: **Leschonski, Kurt, Prof. Dr.-Ing.**
**Am Dammgraben 20**
**W-3392 Clausthal-Zellerfeld(DE)**

Patentinhaber: **Röthele, Stephan, Dipl.-Ing.**
**Am Rollberg 5**
**W-3392 Clausthal-Zellerfeld(DE)**

(72) Erfinder: **Leschonski, Kurt, Prof. Dr.-Ing.**
**Am Dammgraben 20**
**W-3392 Clausthal-Zellerfeld(DE)**
Erfinder: **Röthele, Stephan, Dipl.-Ing.**
**Am Rollberg 5**
**W-3392 Clausthal-Zellerfeld(DE)**

(74) Vertreter: **Behrens, Dieter, Dr.-Ing. et al**
**Wuesthoff & Wuesthoff Patent- und Rechts-**
**anwälte Schweigerstrasse 2**
**W-8000 München 90(DE)**

## Beschreibung

Die Erfindung betrifft eine Vorrichtung zur Probenteilung von dispersen Systemen, wobei sowohl trockene Schüttgüter (Pulver) als auch Partikelkollektive, die in Flüssigkeiten suspendiert sind, angewandt werden können.

Vorrichtungen zur Probenteilung finden gleichermaßen in Produktion und Labor Einsatz, wenn aus großen dispersen Produktmengen repräsentative Analysen für die Qualitätsbeurteilung hergestellt werden müssen. Zu den manuellen Methoden der Probenteilung gehört das Sammeln von Stichproben aus großen Produktmengen (LKW, Schiffsladung, Güterwagen) und deren Teilung auf Analysenmenge durch Kegeln und Vierteln, das bei Aufgabe- oder Stichprobenmengen bis zu etwa 1m³ angewandt wird.

Statische Probenteiler verwendet man, wenn geringere Stichprobenmengen bis zu ca. 0,1 m³ auf Analysenmenge zu reduzieren sind. Für die Messung im Labor werden aber in der Regel nur Analysenmengen von wenigen Gramm (z.B. für die Siebanalyse) bis herunter zu einigen Milligramm (für die Sedimentationsanalyse) und sogar weniger als 1 mg (für Zählverfahren) benötigt, so daß sowohl bei großen als auch mittleren Ausgangs- oder Stichprobenmengen mit zunehmender Reduzierung über Teilmengen auf Analysenmenge der Probenteilungsaufwand ansteigt und die Probenteilungsqualität zuverlässiger werden muß. Aus Gründen der statistischen Sicherheit bei der Erzielung und Sicherstellung der repräsentativen Zusammensetzung der reduzierten Teilmengen muß jede dieser Teilmengen bei der Probenteilung aus möglichst vielen Stichprobenmengen zusammengesetzt sein. Der manuelle Aufwand begrenzt hierbei die zuverlässige Anwendbarkeit statischer Riffelteiler.

Rotierende Riffelteiler bewirken eine erheblich zuverlässigere Probenteilung, weil durch die starke Unterteilung der Ausgangs- oder Stichprobenmenge in tausende von Teilmengen (14.400 Teilmengen von ca. 35 mg stehen bei einem mit 120 U/min rotierenden Teiler mit 8er Teilung zur Verfügung, wenn 500 g in 15 min zugegeben werden) nur noch mit sehr kleinen systematischen Fehlern zu rechnen ist. Kleinste Analysenmengen lassen sich repräsentativ nur noch aus Pasten oder Suspensionen entnehmen, weil die Vereinzelung der Partikel hierbei am wirkungsvollsten (Verdünnung in der Suspension) gelingt. Pasten sind dann unumgänglich, wenn große Partikel in Supsensionen aussedimentieren würden.

Aus der deutschen Patentschrift 602 859 ist eine Vorrichtung zur Probenteilung von dispersen Systemen (Schüttgüter und Suspensionen) durch mehrfache Probenteilung eines Partikelstroms einer Stichprobe in zwei Teilmengen, aus denen eine Analysenmenge gewonnen wird, welche zwei gerade, schräggestellte Rohre besitzt, dem der Partikelstrom dosiert zuführbar ist, das drehantreibbar ist und ein unteres Auslaufende aufweist, bekannt. Zwei abschleudernde Rohre sind Y-förmig unter einem ortsfesten und nicht umlaufenden Schüttguttrichter angeordnet. Nicht die Zentrifugalkraft sondern die Schwerkraft löst die entscheidende Verteilungswirkung für die Probenteilung aus. Die schrägstehenden Rohre reichen bis zur Drehachse mit ihren Einlaufmündungen und nehmen dort das unbewegte Gut auf. Eine Zudosierung im eigentlichen Sinne findet an der Übergabestelle vom Aufgabetrichter zu den Verteilerrohren nicht statt. Die Mündungsgestaltung der Schleuderrohre, die in einem mitrotierenden Rohrabschnitt enden, ist derart, daß das Auffangrohr, das die Teilprobe aufnimmt, so lange verschlossen bleibt, bis eines der beiden Verteilerrohre vorbeidreht. Hierdurch läßt sich eine gute Probenteilung nicht verwirklichen. Im Betrieb stehen sich nämlich zwei Ellipsen gegenüber, und je nachdem in welche Höhe bzw. wie hoch das ausgetragene Schüttgutrinsal im Verteilerrohr gerade liegt, ergeben sich ständig andere, bzw. schwankende Teilungsverhältnisse, die die Erzielung repräsentativer Proben nahezu unmöglich macht.

Aus der deutschen Auslegeschrift 1 034 886 ist ein Probenteiler mit einem feststehenden Kranz von Fächern im Austragsbereich zur Bildung von Teilmengen bekannt, die durch in gleichen Umfangsabständen angeordnete, dem Partikelstrom zugewandte Leitbleche voneinander getrennt sind. Der Partikelstrom wird durch Abschälen von mehr oder weniger breiten Streifen vom rotierenden Verteilerteller bewirkt. Dies führt nicht zu einer einwandfreien Probenteilung und die unteren Schichten kommen ungeteilt am Rand des langsam gedrehten Verteilertellers an. Die Probenteilung wird dadurch ausschließlich durch die Leitbleche, die den Außenumfang des Verteilertellers segmentieren, geleistet. Die den Austragsfächerkranz, an dessen Durchtritte sich Probensammelbehälter anschließen, vorgeordneten Leitbleche könnten daher auch entfallen.

Der in den Patentansprüchen gekennzeichneten Erfindung liegt die Aufgabe zugrunde, die bekannten Vorrichtungen zur Probenteilung dahingehend zu verbessern, daß kleinste Analysenmengen mit äußerst geringen systematischen oder statistischen Fehlern aus großen Ausgangs- oder Stichprobenmengen gewonnen werden können, ohne daß auf die Probenteilung in Pasten zurückgegriffen werden muß, wenn die Stichprobe grobe Partikel enthält.

Die Erfindung sieht zur Probenteilung von dispersen Systemen (Schüttgüter oder Supsensionen), bei der ein durch Schwerkraft oder zwangsgefördert herangeführter Partikelstrom einer Stichprobe mehrfach in Teilmengen unterteilt und aus diesen eine Analysenmenge gewonnen wird, vor, daß der Partikelstrom zentral stoßfrei vertikal zugeführt, zentrifugiert und in tangentialer Abwurfrichtung mehrfach in Teilmengen aufgeteilt aufgefangen wird.

Die Vorrichtung nach der Erfindung zur Durchführung des Verfahrens hat ein senkrechtes Zentralrohr mit einem vertikalen Einlaufabschnitt und einem gekrümmten Auslaufende und ist um die vertikale Zuführachse drehantreibbar, wobei der Partikelstrom in den vertikalen Abschnitt dosiert zugeführt und dort aufgenommen werden kann. Im Abwurfbereich des mit dem Zentralrohr zentrifugierten Partikelstroms ist ein feststehender Kranz von Fächern zur Bildung von Teilmengen, die durch in gleichen Umfangsabständen angeordnete scharfkantige, dem Partikelstrom zugewandte Stege voneinander getrennt sind.

Die Erfindung verändert das beschriebene Prinzip des rotierenden Riffelteilers insoweit, als nicht mehr die Aufgabenmengen rotieren und über einen statischen Teilerkopf der unter Schwerkraftwirkung sich bewegende Schüttgutstrom aufgeteilt wird, sondern die Rotation in einen dosierten senkrechten Schüttgut- oder Suspensionsstrom verlegt ist. Der zunächst vertikal verlaufende zu teilende Gutstrom wird dann bis zu etwa 90° umgelenkt. Durch die zum Auslauf hin zunehmende Verlagerung der Gutbewegung aus dem Rotationszentrum entsteht eine Zentrifugalwirkung, die ein beschleunigtes und damit die Partikelvereinzelung begünstigendes Bewegungsverhalten des Gutstromes zur Folge hat.

Der Abwurfparabel folgend wird der in Einzelpartikel aufgelöste Partikelstrom unmittelbar hinter der Rotationsebene von einem feststehenden Kranz von Fächern in zahlreiche - vorzugsweise bis zu 32 - Teilmengen pro Umdrehung aufgeteilt.

Bei einer bevorzugten Ausführungsform weisen die Flanken der scharfkantigen Stege den Flugbahnen der Partikel des Partikelstroms folgende, die Fächer unter einem Winkel von 30° bis 60° anstellende seitlich begrenzende Wände sowie gekrümmte oder geneigte Fächerabdeckungen zur Umlenkung des Partikelstroms und gekrümmte oder geneigte Böden auf, derart, daß keine Ablagerungen den freien Fluß des Partikelstromes behindern. Die die einzelnen Fächer begrenzenden Seitenwände beginnen an den scharfkantigen Stegflanken und sind etwa parallel zur Flugrichtung der einzelnen Partikel orientiert, so daß zur Abwurfrichtung die Seitenwände unter einem Winkel von 30° bis 60° angestellt sind. So wird verhindert, daß durch den sich sonst wiederholenden Aufprall der Einzelpartikel Anbackungen und Verschleiß entstehen, die eine repräsentative Probenteilung ungünstig beeinflussen würden.

Die Anstellung der Seitenwände bedingt die senkrechte Steganordnung am Fächerkranz, damit scharfkantige Stegflanken und dadurch eindeutige Probenteilungsverhältnisse gewährleistet sind. Wenn die scharfkantigen Stegflanken nicht oder nur teilweise senkrecht stehen und sich dadurch von oben in der Draufsicht z.B. trapezförmige Eintrittsöffnungen in den Fächerkranz ergeben, erreicht man eindeutige Probenteilungsverhältnisse hinsichtlich der Gleichheit der aufgeteilten Stichprobe nur dann, wenn die Rotationsachse des Gutstromes mit der Mittelpunktsachse des Fächerkranzes zusammenfällt und der abgeworfene Partikelstrom rotationssymmetrisch ist.

Es sind vorzugsweise um 90° gekrümmte oder entsprechend geneigte Fächerabdeckungen vorgesehen, damit der Partikelstrom in am äußeren Umfang an der Unterseite senkrecht eingehängte Teilmengengefäße, z.B. Aufnahmegläser, behutsam umgelenkt wird. Gleichzeitig können Fächerböden so ausgeführt sein, daß keine Ablagerungen den freien Fluß des Partikelstromes behindern können. Diese konstruktiven Vorgaben sind vorzugsweise in einem zentralen Teilerkern verwirklicht. In diesem Teilkern ist eine vorzugsweise trapezförmige, am Innenradius senkrecht stehende Eintrittsöffnung für jede Teilmenge fertigungsgerecht in eine an der Unterseite waagerecht liegende Öffnung zum Teilmengenauslaß umgeformt. Dabei verläuft die Achse des entstehenden und die Öffnungen verbindenden Leitkanals in Abwurfrichtung des Partikelstromes, also angestellt in bezug auf die radiale Richtung. Es ergeben sich vier bevorzugte Ausführungsformen:

Bei der ersten werden die Leitkanäle in Flugrichtung von außen nach innen und von unten nach oben zum Fächerkranz, oder entsprechend von innen nach außen und von oben nach unten, aufgebohrt. Die kreisförmigen Austrittsöffnungen für den Anschluß der Teilmengengefäße werden vorzugsweise eingesenkt, während die senkrechten Stegflanken zur Bildung des Fächerkranzes angefräst werden können.

Bei der zweiten und dritten Ausführungsform wird der zentrale Teilerkern geteilt ausgeführt. Entweder werden die Leitkanäle im Oberteil, beispielsweise durch einen Walzenfräser, ausgebildet während das konische Unterteil für den geneigten Bodenabschluß sorgt. Oder aber es werden die Leitkanäle im Unterteil, beispielsweise durch einen Fingerfräser, erzeugt und es ist ein der Wurfparabel angepaßtes ausgedrehtes Oberteil als Fachabdeckung vorgesehen. Auch hier sind die Austrittsöffnungen für die Teilmengengefäße durch überfassende Einsenkungen im Unterteil angebracht.

Bei der vierten Ausführungsform werden wie bei der ersten die Leitkanäle aufgebohrt, der Fächerkranz aber durch zirkulierende Kegelfräsungen, deren Kegelspitze und Zirkulationsachse in der jeweiligen Mittelachse des Leitkanals liegen, in den ungeteilten Teilerkern eingearbeitet.

Der Teilerkern sitzt zentriert in einem vorzugsweise handelsüblichen Glasbehälter oder Rohr, der bzw. das in einem nach vorne offenen C-förmigen Gehäuse steht. Im Gehäusefuß ist neben nach vorne herausgeführten Bedienungs- und Schaltelementen eine von der Seite über einen Exzenter oder Hebel verstellbare Standplatte für ein Sammelgefäß aus Glas untergebracht. In einer Gehäuserückwand, die einen Fuß stabil mit einem Gehäusekopf verbindet, sind Antriebselemente für das rotierende Zentralrohr untergebracht. Das Zentralrohr sitzt in der verlängerten Achse des Glasbehälters oder Rohrs und Teilerkerns und wird über einen Riemenantrieb angetrieben. Das Gut läuft über einen feststehenden, auf dem Gehäusedeckel (Kopf) aufgesetzten Trichter zu, in den die Stichprobe mit handelsüblichen Schwingrinnen als Schüttgut oder Suspension aus Vorratsbehältern zudosiert werden kann.

Das untere, gekrümmte Auslaufende des drehantreibbaren Zentralrohres (Innendurchmesser z.B. ca. 16 mm) ragt in den Teilerkern soweit hinein, daß der radial abgeworfene Gutstrom die unmittelbar gegenüber angeordneten Eintrittsöffnungen der Fächer direkt nach dem Austritt aus dem Zentralrohr erreicht. Der Abstand zwischen Zentralrohrende und feststehenden Stegflanken des Fächerkranzes kann bis zu 5 mm, in Sonderfällen bis zu 10 mm, betragen. Damit wird sichergestellt, daß die Teilung grobdisperser Systeme ohne Funktionsbehinderung erfolgen kann.

Durch Aufsetzen des Teilerkerns auf das Sammelgefäß kann wahlweise die Anzahl der aufgefangenen Teilmengen bestimmt werden. Alle Fächeröffnungen, an deren Leitkanalende keine Teilmengengefäße angesetzt sind, leiten die so verworfenen Teilmengen zu einem Sammelgefäß oder Auffangbehälter. Damit ist es möglich, aus der unterteilten gesamten Stichprobe entweder nur eine, einige oder alle repräsentativen Teilmengen als Analysenmenge aufzufangen. Die Teilmengen werden nach Absenkung des selbstzentrierenden Auffangbehälters zusammen mit dem Teilerkern entnommen. Der Auffangbehälter ist dichtend an ein Kopfteil des Gehäuses mit Hilfe der hohen verstellbaren Standplatte angedrückt. Die Absenkbewegung löst die Dichtung und senkt die Oberkante des Teilerkerns soweit ab, daß der Auffangbehälter mit dem Einsatz unbehindert unter dem Auslaufende des Zentralrohres herausgezogen werden kann.

Nach Auswechseln der Teilmengengefäße kann die Vorrichtung für die nächste Propenteilung vorbereitet und eingesetzt werden.

Sonderausführungen der Vorrichtung können so ausgebildet sein, daß der gesamte Antriebs- und Bedienungsteil auf den Auffangbehälter und den Teilerkern aufgesetzt werden, so daß ein umfassendes Gehäuse entfallen kann. Die Probenentnahme wird dann nach Abnahme der aufgesetzten Antriebseinheit wie beschrieben durchgeführt.

Besondere Ausführungen des Teilerkerns können so ausgebildet sein, daß mit reduzierten Anforderungen an die Probenteilung auch der Fertigungsaufwand zur Herstellung der Leitkanäle samt Ein- und Austrittsgeometrie vermindert ist. So sind Teilerkerne denkbar, die nach dem gleichen Prinzip zur Herstellung von wenigen Teilmengen mit nur 16,8,4,2 oder auch nur mit einem Fächerkranz, Leitkanal und Auffangbehälter ausgestattet sind.

Ausführungsbeispiele der Erfindung sind anhand einer schematischen Zeichnung näher erläutert, in der zeigt:

Fig. 1 und 1a zwei senkrechte, um 90° gegeneinander gedrehte Schnitte 1a-1a bzw. 1-1 eines Probenteilers mit C-förmigem Gehäuse,

Fig. 2 den Teilerkopf eines Probenteilers nach Fig. 1 in vergrößerter Darstellung,

Fig. 3 ein an den feststehenden Teilerkern des Teilerkopfes nach Fig. 2 angehängtes Teilmengengefäß,

Fig. 3a einen Schnitt längs der Linie 3a-3a in Fig. 3,

Fig. 4 und 4a in einer Draufsicht und einer Schnittansicht eine erste Ausführungsform eines feststehenden zweigeteilten feststehenden Teilerkerns für einen Probenteiler nach der Erfindung,

Fig. 5 und 5a in einer Draufsicht und einer Schnittansicht eine zweite Ausführungsform eines feststehenden zweigeteilten Teilerkerns für einen Probenteiler nach der Erfindung,

Fig. 6 und 6a in einer Draufsicht und einer Schnittansicht einen einteiligen feststehenden Teilerkern für einen Probenteiler nach der Erfindung,

Fig. 7 eine Draufsicht auf einen feststehenden Teilerkern aus dünnwandigen Stegblechen für einen Probenteiler nach der Erfindung,

Fig. 8 eine gegenüber Fig. 1 abgewandelte Form des oberen Teils eines Gehäuses des Probenteilers und

Fig. 9 eine schematische Darstellung des Anschlusses eines Probenteilers an ein Förderrohr für eine Suspension, aus der eine Analysenmenge gewonnen werden soll.

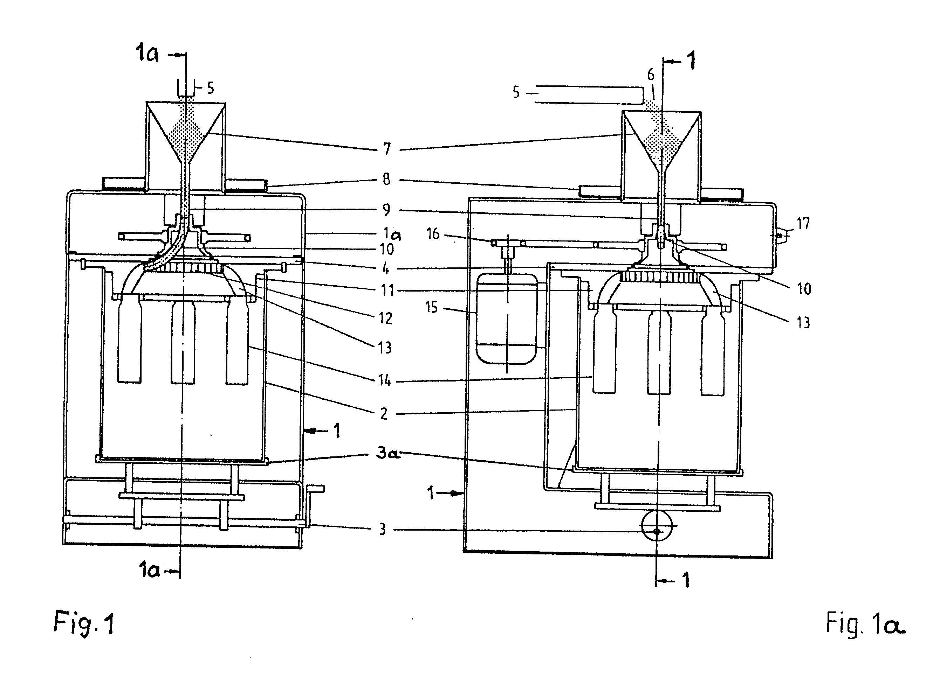

In Fig. 1 und Fig. 1a ist in zwei senkrechten, um 90° gegeneinander gedrehten Schnitten 1a-1a bzw. 1-1 ein Aufbau des Probenteilers nach der Erfindung mit C-förmigem Gehäuse 1 dargestellt. In das Gehäuse 1 wird ein Auffangbehälter 2 auf eine Standplatte 3a hineingestellt und über eine exzentrische Hebemechanik 3 an eine Kopfplatte 4 dichtend und zentriert angedrückt. Aus einer handelsüblichen Dosierrinne 5 für Schüttgüter oder einer entsprechenden Hilfseinrichtung für Suspensionen wird eine in Analysenmengen zu teilende Stichprobe 6 in Form eines Gutstromes einem Aufgabetrichter 7 zugeführt. Ein konzentrisches Überlaufgefäß 8 sammelt fehldosierte Überschußmengen. Über ein feststehendes Auslaufrohr 9 gelangt die Stichprobe 6 in ein drehantreibbares, viertelkreisförmig gebogenes Zentralrohr 10, das den Partikelstrom zentrifugiert und ihn an seinem freien Austrittsende im freien Flug entlang Flugbahnen in einen Zwischenraum zu einem Teilerkern 11 abwirft.

Der frei fliegende Partikelstrom wird in Umfangsrichtung von einem konzentrischen Fächerkranz 12 aufgenommen und in Teilmengen unterteilt bzw. zerhackt, durch Leitkanäle 13 einer entsprechenden Anzahl Teilmengengefäßen 14 zugeführt oder im Auffangbehälter 2 wieder gesammelt. Im Steg des C-förmigen Gehäuses 1 ist ein Antriebsmotor 15 untergebracht, der z.B. über einen Riemenantrieb 16 das Zentralrohr 10 in Drehung versetzt. An einer Stirnwand des Oberteils 1a des Gehäuses 1 sind elektrische Schaltelemente 17 angeordnet.

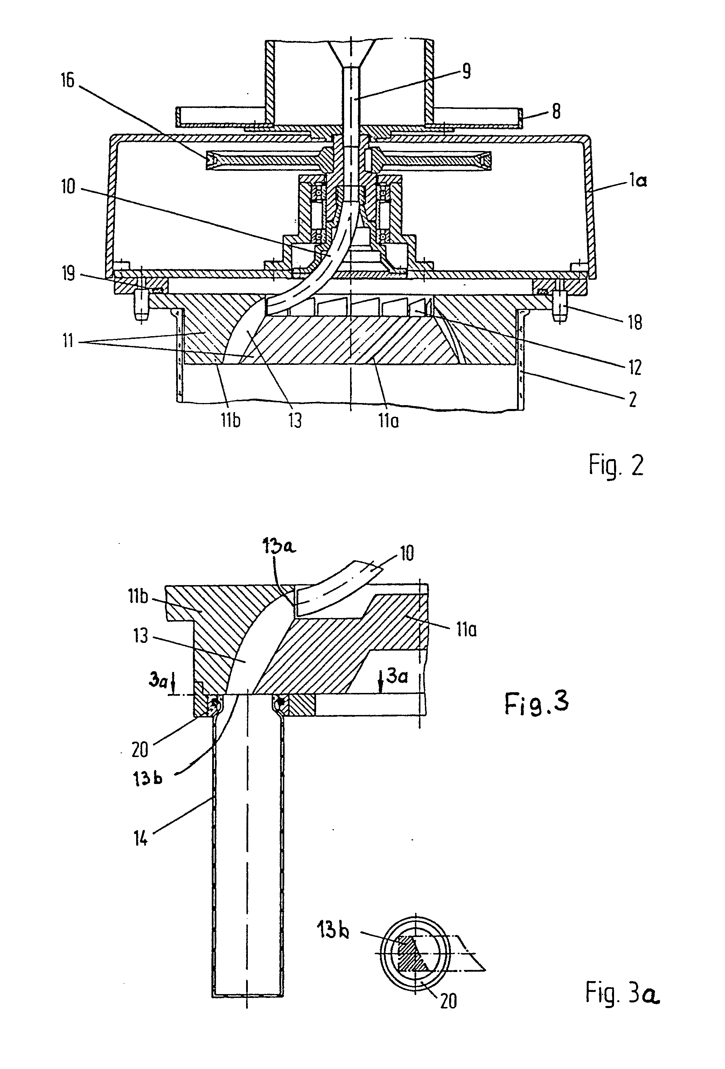

In Fig. 2 sind ein Oberteil 1a des Gehäuses 1 und der Teilerkern 11 detailliert im Schnitt dargestellt. Das feststehende Auslaufrohr 9 endet in einem angetriebenen Lagerteil des Zentralrohres 10. Das Zentralrohr 10 endet unmittelbar vor dem Fächerkranz 12. Öffnungen des Fächerkranzes 12 bilden Eintrittsöffnungen 13a für den Partikelstrom in die Leitkanäle 13, welche die Teilströme umlenken. Der hier dargestellte Teilerkern 11 besteht aus einem konischen Unterteil 11a und einem Oberteil 11b, in die die Leitkanäle 13 mit einem Walzenfräser eingearbeitet sind. Das Oberteil 11b ist mit seinem Außenumfang an Gehäusezapfen 18 zentriert und an einem Radialring 19 abgedichtet, wenn der Teilerkern 11 im angedrückten Auffangbehälter 2 steckt.

In Fig. 3 erkennt man ein mit einer Schnappvorrichtung 20 an die Austrittsöffnung 13b des Leitkanals 13 angehängtes Teilmengengefäß 14. Fig. 3a zeigt im Schnitt A-A die Lage und Form der Austrittsöffnung 13b in der überfassenden Halsöffnung des Teilmengengefäßes 14. Handelsübliche Probengläser können so einfach aufgesteckt und abgezogen sowie separat verschlossen aufbewahrt werden.

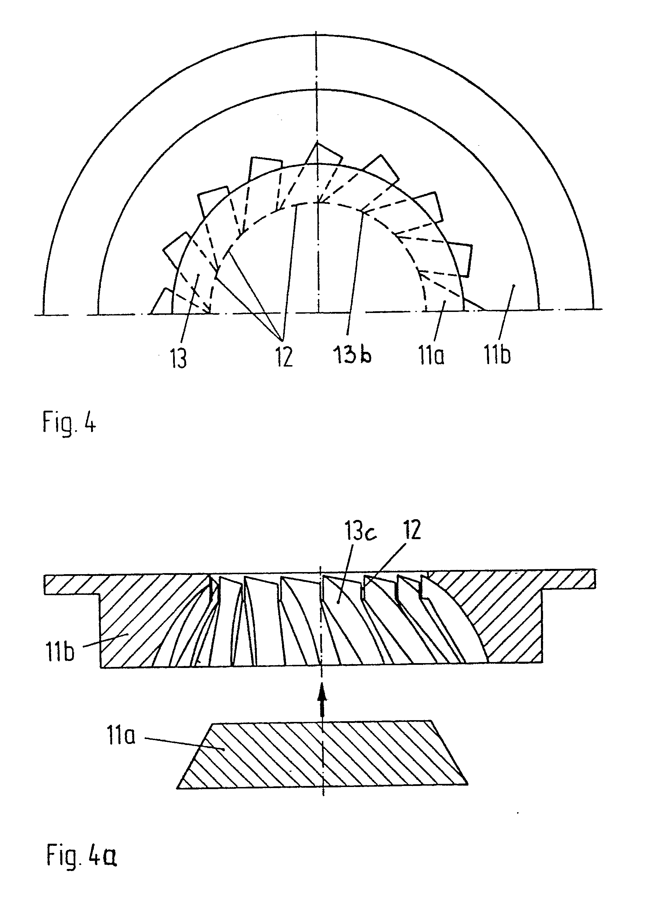

In Fig. 4 und Fig. 4a ist eine erste Ausführungsform des Teilerkerns 11 dargestellt. Fig.4 zeigt die halbe Draufsicht auf die Unterseite des Teilerkerns 11, der in Fig. 4a im Schnitt als Ober- und Unterteil in Explosionsdarstellung zu sehen ist. Die Leitkanäle 13 sind mit einem Walzenfräser in das Oberteil 11b in Abwurfrichtung so eingearbeitet, daß sich möglichst scharfkantige, senkrecht stehende Stege 13c am Innenradius des Fächerkranzes 12 ergeben und die begrenzenden Außenflächen der Leitkanäle 13 den Gutstrom viertelkreisförmig an die untere, waagerechte Austrittsöffnung 13b des Teilerkerns 11 umlenken. Die konische Innenfläche der Leitkanäle 13 wird von der kegeligen Außenfläche des zentrierend eingesetzten Unterteiles 11a gebildet.

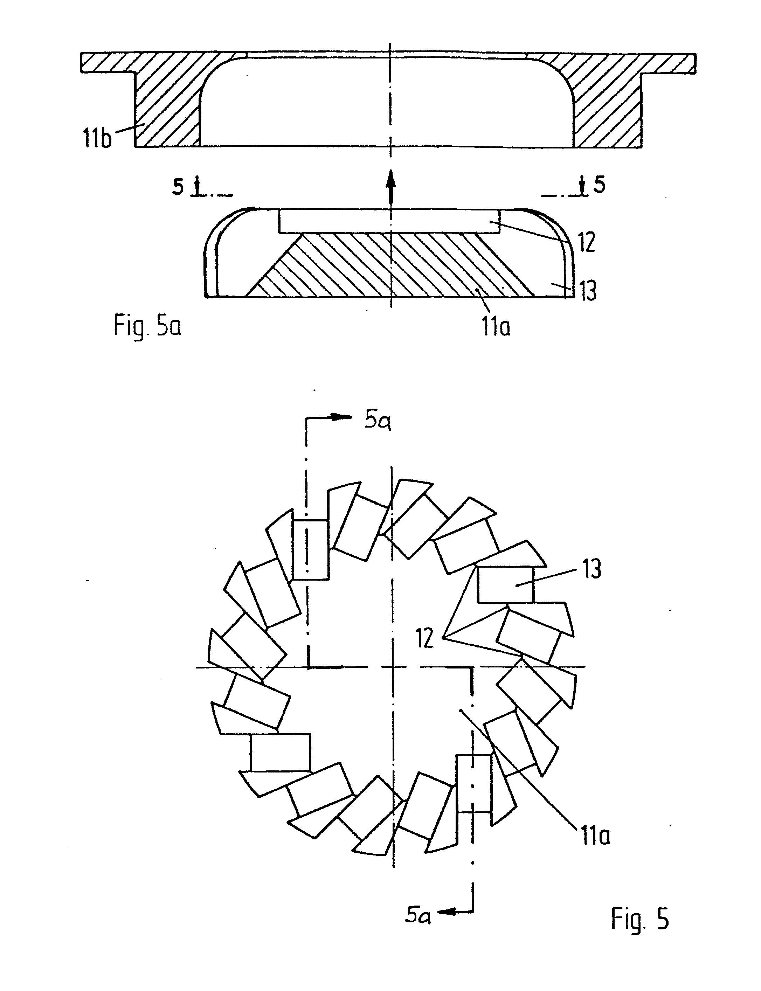

In Fig. 5 ist als zweite Ausführungsform der zweigeteilte Teilerkern 11 so ausgeführt, daß die Leitkanäle 13 im Unterteil 11a mit einem Fingerfräser erzeugt werden und die äußeren Abdeckungen der Leitkanäle durch das entsprechend ausgedrehte Oberteil 11b gebildet werden. Der einfacheren Fräsbearbeitung steht eine schwierigere Zentrierung gegenüber. Es lassen sich allerdings leichter scharfkantige Stege 13c des Fächerkranzes 12 erzielen. Außerdem unterschneiden Abrutschflächen der Leitkanäle 13 die Eintrittsöffnungen 13a am Fächerkranz 12, so daß geringste Ablageflächen für Fehlanteile bei der Partikelübergabe aus dem Zentralrohr 10 verbleiben. Fig. 5 zeigt die Draufsicht 5-5 auf die Fräsfläche des Unterteils 11a, während in Fig. 5a das Unterteil 11a und das Oberteil 11b in Explosionsdarstellung geschnitten zu sehen sind.

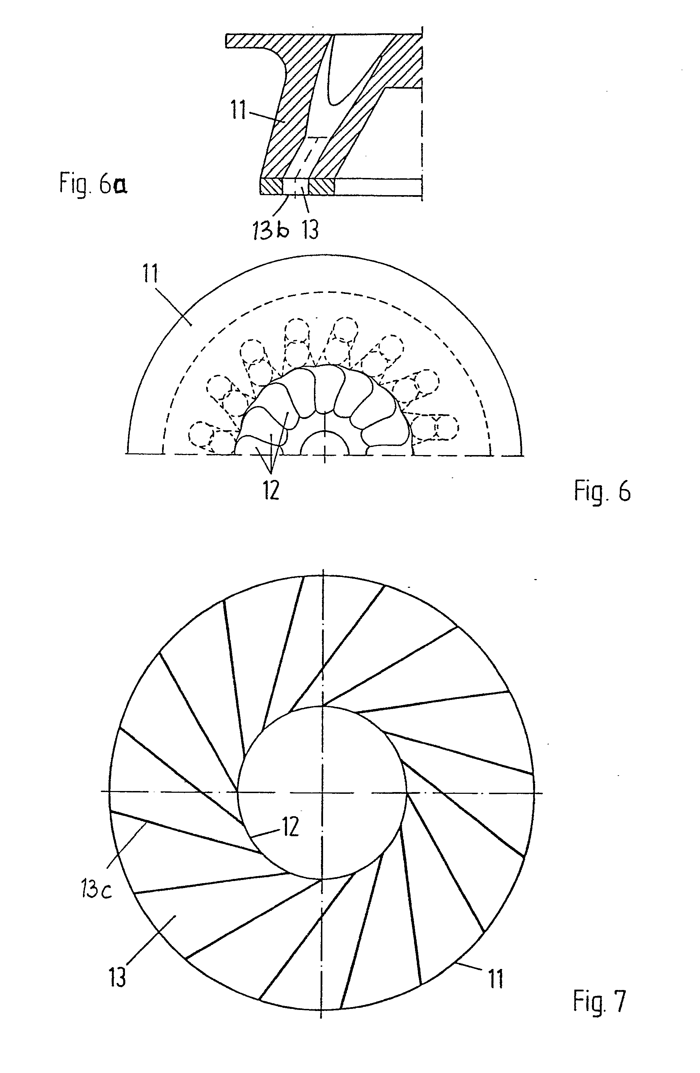

Fig. 6 und Fig. 6a ist der aus einem Stück gefertigte Teilerkern 11 in Draufsicht bzw.im Axialschnitt dargestellt. Fächerkranz 12 und Leitkanäle 13 entstehen, wenn die Leitkanäle 13 im unteren Austrittsteil aufgebohrt und im oberen Eintrittsteil durch zirkulierende Kegelfräsungen hergestellt werden. Es entstehen scharfkantige Stegflanken, die in Draufsicht hystereseförmig verlaufen und im Schnitt als parabelartige, nach oben offene Trichter erscheinen. Die genaue geometrische Kontur ergibt sich aus der fluchtenden achsparallelen Verschneidung eines Zylinders mit einem Kegelmantel und deren kaskadenartige Ineinanderschachtelung an einem Außenumfang, wobei der Abstand der Symmetrieachsen geringer als der Durchmesser des begrenzenden Kegelfräsers sein muß, so daß sich auch zwischen den Kegelmänteln eine Verschneidung ergibt. Diese Verschneidungslinien bilden den Fächerkranz 12.

In Fig.7 ist die Ausbildung des Teilerkerns 11, der Leitkanäle 13 und des Fächerkranzes 12 aus dünnwandigen Stegblechen als eine weitere Möglichkeit dargestellt.

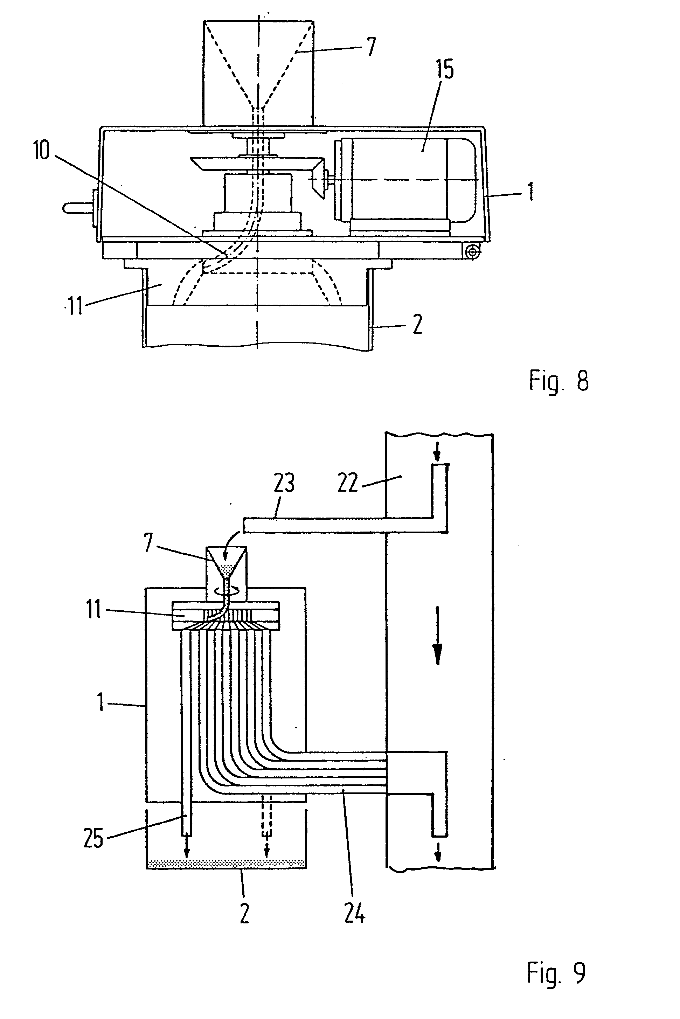

In Fig.8 ist der Aufbau des Gehäuses aus Fig. 1 fortentwickelt zu einem Aufbau, bei dem vom C-förmigen Gehäuse nur den Oberteil übernommen wurde. Antriebsmotor 15 und Zentralrohr 10 sind zusammen mit dem Einlauftrichter 7 in einem aufklappbaren Gehäuseoberteil 1a des Gehäuses 1 zusammengebaut und gemeinsam mit dem Teilerkern 11 auf einen Auffangbehälter 2 aufgesetzt.

Diese Ausführung eignet sich besonders für die verfahrenstechnische Eingliederung des Probenteilers in eine on-line-Prozeßmeßanordnung, wie sie in Fig. 9 dargestellt ist. Ein aus einem Mehrphasen-Förderrohr 22 repräsentativ entnommener Suspensions-Stichprobenstrom23 wird in den Aufgabetrichter 7 des Probenteilers gegeben, durch das zum Auslaß hin nach außen gekrümmte Zentralrohr 10 zentrifugiert und im Teilerkern 11 in zahlreiche Teilmengenströme aufgeteilt. Nach der Probenteilung werden ausgewählte Teilmengenströme 25 als Analysenmenge im Auffangbehälter 2 aufgefangen und die restlichen Teilmengenströme 24 wieder zusammengefaßt und in das Förderrohr 22 zurückgeführt.

**Patentansprüche**

1. Vorrichtung zur Probenteilung von dispersen Systemen (Schüttgüter oder Suspensionen) durch mehrfache Probenteilung eines Partikelstroms einer Stichprobe in Teilmengen, aus denen eine Analysemenge gewonnen wird, mit einer Einrichtung (5), durch die der Partikelstrom zentral und vertikal einem Verteiler (7) zuführbar ist, mit einem sich daran anschließenden, von der zentralen, vertikalen Zuführachse nach außen verlaufenden, um sie rotierendes Rohr (10) zum Abschleudern des Partikelstroms und mit Fächern (12) zum Auffangen einer Teilmenge des abgeschleuderten Partikelstroms, dadurch **gekennzeichnet, daß das** Rohr (10) einen vertikalen Einlaufabschnitt und ein gekrümmtes unteres Auslaufende aufweist und um die vertikale Zuführachse drehantreibbar ist, wobei der Partikelstrom in den vertikalen Abschnitt dosiert zugeführt und dort aufgenommen werden kann, und weiter gekennzeichnet durch einen feststehenden Kranz (12) von Fächern im Abwurfbereich des zentrifugierten Partikelstroms zur Bildung von Teilmengen, die durch in gleichen Umfangsabständen angeordnete scharfkantige, dem Partikelstrom zugewandten Stege (13c) voneinander getrennt sind.

2. Vorrichtung nach Anspruch 1, dadurch **gekennzeichnet,** daß die Flanken der scharfkantigen Stege (13c) den Flugbahnen der Partikel des Partikelstroms folgende, die Fächer unter einem Winkel von 30° bis 60° anstellende seitlich begrenzende Wände sowie gekrümmte oder geneigte Fächerabdeckungen zur Umlenkung des Partikelstroms und gekrümmte oder geneigte Böden aufweisen derart, daß keine Ablagerungen den freien Fluß des Partikelstromes behindern.

3. Vorrichtung nach Anspruch 2, dadurch **gekennzeichnet,** daß jedes Fach eine Eintrittsöffnung (13a) mit senkrecht stehendem, insbesondere rechteckigem Querschnitt aufweist und in eine waagerecht liegende Austrittsöffnung (13b) übergeht, und an es ein Teilmengengefäß (14), insbesondere Probenglas mit Schnappverschluß, so angebracht werden kann, daß dessen Öffnung die waagerechte Austrittsöffnung vollständig überdeckt.

4. Vorrichtung nach Anspruch 3, dadurch **gekennzeichnet,** daß die Eintrittsöffnung (13a) mit der waagerecht liegenden Austrittsöffnung (13b) jedes Fachs durch einen Leitkanal (13) verbunden ist, der in einem Teilerkern (11) ausgebildet und zu einem Radius des Teilerkerns (11) unter einem Winkel angestellt ist, der der Richtung des Abwurfs des Partikelstroms aus dem Rohr (10) entspricht.

5. Vorrichtung nach Anspruch 4, dadurch **gekennzeichnet,** daß jeder Leitkanal (13) im unteren Teil in den Teilerkern (11) in Flugrichtung des Partikelstroms gebohrt ist, die Flanken der Stege oben durch zirkulierende Fräsung angefräst und waagerechte, insbesondere kreisförmige Austrittsöffnungen (13b) für die Teilmengengefäße (14) unten eingesenkt oder angesetzt sind.

6. Vorrichtung nach Anspruch 4, dadurch **gekennzeichnet,** daß der Teilerkern (11) aus einem konischen Unterteil (11a) und einem Oberteil (11b) zusammengesetzt ist, die Leitkanäle (13) in das Oberteil (11b) mit einem Walzenfräser eingearbeitet und mit dem Unterteil (11a) abgedeckt sind und daß waagerechte, insbesondere kreisförmige Austrittsöffnungen (13b) für die Teilmengengefäße (14) unten eingesenkt oder angesetzt sind.

7. Vorrichtung nach Anspruch 4, dadurch **gekennzeichnet,** daß der Teilerkern (11) aus einem Unterteil (11a) und einem der Wurfparabel des Partikelstroms angepaßt ausgedrehten Oberteil (11b) zusammensetzt ist, die Leitkanäle (13) in das Unterteil (11a) mit einem Fingerfräser eingearbeitet, mit dem Oberteil (11b) abgedeckt und waagerechte, insbesondere kreisförmige Austrittsöffnungen (13b) für die Teilmengenbehälter (14) unten eingesenkt oder angesetzt sind.

8. Vorrichtung nach Anspruch 4,
dadurch **gekennzeichnet,**
daß der Teilerkern (11) aus Stegblechen gefaltet und zusammengesetzt ist.

9. Vorrichtung nach Anspruch 4,
dadurch **gekennzeichnet,**
daß der Teilerkern (11) auf einen Auffangbehälter (2) aufgesetzt ist, der auf einer höhenverstellbaren Standplatte (3a) eines Gehäuses (1) unter der verlängerten Achse des in einem Kopfteil des Gehäuses angeordneten Rohres (10) steht, dichtend anpreßbar und soweit absenkbar ist, daß der Auffangbehälter (2) zusammen mit dem Teilerkern (11) unter dem Auslaufende des Rohres (10) vorbeigezogen und aus dem Gehäuse (1) herausgenommen werden kann.

10. Vorrichtung nach Anspruch 4,
dadurch **gekennzeichnet,**
daß der Teilerkern (11) auf einen Auffangbehälter (2) und das Rohr (10) zusammen mit einer Antriebs-, Bedienungs- und Stichprobenzuführeinheit zentriert auf den Teilerkern (11) aufgesetzt ist.

11. Vorrichtung nach Anspruch 1,
dadurch **gekennzeichnet,**
daß auf Gehäuse (1) oberhalb des Rohrs (10) ein einem Aufgabetrichter (7) feststehend angeordnet ist.

12. Vorrichtung nach Anspruch 1,
dadurch **gekennzeichnet,**
daß der Fächerkranz (12) bis zu 32 Fächer aufweist.

**Claims**

1. Apparatus for dividing samples from disperse systems (bulk materials or suspensions) through multiple division of a particle stream of a sample taken at hasard into subsets from which a quantity to be analyzed is taken, said apparatus having a means (5) for feeding the particle stream centrally and in a vertical direction to a distributor (7), a tube (10) which is contiguous thereto, extends outward from the central, vertical feeding axis and rotates about said axis for throwing off the particle stream, and cases (12) for intercepting a subset of the thrown off particle stream,
**characterized** in that
the tube (10) has a vertical inlet portion and a curved lower outlet end and is capable of being rotatably driven about the vertical feeding axis, wherein the particle stream can be metered into the vertical portion and can be received thereat,
and further characterized by
a stationary ring (12) of cases within the area of discharge of the particle stream being centrifuged for forming subsets which are separated from each other by sharpe-edged, circumferentially equally spaced webs (13c) facing the particle stream.

2. Apparatus according to claim 1,
**characterized** in that
the sides of the sharp-edged webs (13c) have laterally delimiting walls aligned to the trajectories of the particles of the particle stream, and setting the cases at an angle of 30° to 60° as well as curved or inclined case covers for deflecting the particle stream, and curved or inclined bottoms, whereby the free flowing of the particle stream is not hindered by any deposit.

3. Apparatus according to claim 2,
**characterized** in that
each case has an inlet aperture (13a) with a vertically arranged, especially rectangular cross section, and verges to a horizontally arranged outlet aperture (13b), and that a subset receiving vessel (14), more particularly a test glass provided with a snap connection, can be attached thereto so that the mouth of the latter completely covers the horizontal outlet aperture.

4. Apparatus according to claim 3,
**characterized** in that
with each case, the inlet aperture (13a) and the horizontally arranged outlet aperture (13b) are connected with each other by a guiding channel (13) which is formed in a dividing core (11) and is set to a radius of the dividing core (11) at an angle corresponding to the direction in which the particle stream is thrown off out of the tube (10).

5. Apparatus according to claim 4,
**characterized** in that
each guiding channel (13) has its lower portion formed by drilling into the dividing core (11) in the direction of the trajectory of the particle stream, the upper sides of the webs are formed by milling through circular milling, and in that horizontal, especially circular oulet apertures (13b) for the subset receiving vessels (14) are countersunk in or put on on the bottom.

6. Apparatus according to claim 4,

characterized in that
the dividing core (11) is composed of a conical bottom part (11a) and a top part (11b), the guiding channels (13) are machined into the top part (11b) by means of a cylindrical cutter and are covered by the bottom part (11a), and in that horizontal, especially circular outlet apertures (13b) for the subset receiving vessels (14) are countersunk or put on on the bottom.

7. Apparatus according to claim 4,
   characterized in that
   the dividing core (11) is composed of a bottom part (11a) and a top part (11b), the latter being matched by turning to the parabolic trajectory of the particle stream, the guiding channels (13) are machined into the bottom part (11a) by means of an end-mill cutter and are covered by the top part (11b), and in that horizontal, especially circular outlet apertures (13b) for the subset receiving vessels (14) are countersunk in or put on on the bottom.

8. Apparatus according to claim 4,
   characterized in that
   the dividing core (11) is folded from and composed of metal sheets for webs.

9. Apparatus according to claim 4,
   characterized in that
   the dividing core (11) is put onto the top of a collecting vessel (2) which stands on a vertically adjustable mounting plate (3a) of a housing (1) underneath the extension of the axis of the tube (10) arranged in a top part of the housing, is capable of being sealingly pressed into contact and of being lowered to such extent that the collecting vessel (2) along with the dividing core (11) can be withdrawn past the bottom of the outlet end of the tube (10) and be removed out from the housing (1).

10. Apparatus according to claim 4,
    characterized in that
    the dividing core (11) is put onto the top of a collecting vessel (2), and in that the tube (10) along with a driving, operating and sample feeding unit is put centrally onto the top of the dividing core (11).

11. Apparatus according to claim 1,
    characterized in that
    a feeding hopper (7) is stationarily disposed above the tube (10) on top of a housing (1).

12. Apparatus according to claim 1,
    characterized in that
    the vane-type ring (12) includes up to 32 cases.

**Revendications**

1. Dispositif pour la division d'échantillons pris dans des systèmes en dispersion (matières en vrac ou suspensions) en réalisant des partages multiples d'un courant de particules d'un échantillon pris au hasard en des sous-ensembles dans lesquels on prendra une quantité à analyser, ledit dispositif comprenant un moyen (5) permettant l'amenée centrale et en direction verticale du courant de particules vers un distributeur (7), un tube (10) qui y est contigu, s'étend vers l'extérieur en partant de l'axe d'amenée vertical central, et tourne autour de lui pour jeter le courant de particules, et des cases (12) pour collecter un sous-ensemble du courant de particules jeté,
   caractérisé en ce que
   le tube (10) comporte une partie d'admission verticale et une extrémité de sortie inférieure courbe et est capable d'être entraîné en rotation autour de l'axe d'amenée vertical, le courant de particules pouvant être introduit dans la partie verticale d'une façon dosée et y être reçu,
   et en outre caractérisé par
   une couronne stationnaire (12) de cases disposée dans la zone d'éjection du courant de particules centrifugé, destinée à former des sous-ensembles qui sont séparés les uns des autres par des nervures (13c) à arêtes vives, équidistantes en direction circonférentielle et tournées vers le courant de particules.

2. Dispositif selon la revendication 1,
   caractérisé en ce que
   les flancs des nervures (13c) à arêtes vives comportent des parois de délimitation latérale, orientées suivant les trajectoires des particules du courant de particules et définissant la position inclinée des cases sous un angle de 30° à 60°, ainsi que des couvercles courbes ou inclinés pour le détournement du courant de particules, et des fonds courbes ou inclinés, de telle manière qu'aucun dépôt ne gênerait le libre écoulement du courant de particules.

3. Dispositif selon la revendication 2,
   caractérisé en ce que
   chaque case comporte une ouverture d'admission (13a) ayant une section droite en position verticale, plus particulièrement de forme rectangulaire, et se confond avec une ouverture de sortie horizontale (13b), et en ce qu'un récipient pour sous-ensembles (14), plus particulièrement une éprouvette comprenant une fermeture à déclic, peut être monté sur la case de telle façon que son goulot recouvre complètement l'ouverture de sortie horizontale.

4.  Dispositif selon la revendication 3, **caractérisé** en ce que
dans chaque case, l'ouverture d'admission (13a) est reliée à l'ouverture de sortie horizontale (13b) par un passage de guidage (13) qui est pratiqué dans un noyau diviseur (11) et est incliné, par rapport à un rayon du noyau diviseur (11), sous un angle qui correspond à la direction de jetée du courant de particules à la sortie du tube (10).

5.  Dispositif selon la revendication 4, **caractérisé** en ce que
la partie inférieure de chaque passage de guidage (13) est percée dans le noyau diviseur (11) selon la direction de la trajectoire du courant de particules; les flancs des nervures, en haut, sont fraisés par un fraisage circulaire; et en ce que des ouvertures de sortie horizontales, plus particulièrement de forme circulaire, pour les récipients pour sous-ensembles (14) sont réalisées par chambrage ou par attachement respectivement dans ou à la surface inférieure.

6.  Dispositif selon la revendication 4, **caractérisé** en ce que
le noyau diviseur (11) se compose d'une partie inférieure (11a) et d'une partie supérieure (1b); les passages de guidage (13) sont pratiqués dans la partie supérieure (11b) au moyen d'une fraise cylindrique et sont recouverts par la partie inférieure (11a): et en ce que les ouvertures horizontales (13b), plus particulièrement de forme circulaire, pour les récipients (14) pour sous-ensembles sont réalisées par chambrage ou par attachement respectivement dans ou à la surface inférieure.

7.  Dispositif selon la revendication 4, **caractérisé** en ce que
le noyau diviseur (11) se compose d'une partie inférieure (11a) et d'une partie supérieure (11b) adaptée par tournage à la trajectoire parabolique du courant de particules; les passages de guidage (13) sont pratiqués dans la partie inférieure (11a) au moyen d'une fraise de bout et sont recouverts par la partie supérieure (11b); et en ce que des ouvertures de sortie horizontales (13b), plus particulièrement de forme circulaire, sont réalisées par chambrage ou par attachement respectivement dans ou à la surface inférieure.

8.  Dispositif selon la revendication 4, **caractérisé** en ce que
le noyau diviseur (11) est plié et se compose de tôles métalliques de nervures.

9.  Dispositif selon la revendication 4, **caractérisé** en ce que
le noyau diviseur (11) est mis en place sur un récipient collecteur (2) qui est monté sur une plaque de montage (3a), réglable en hauteur, d'un boîtier (1), sous la ligne de prolongement de l'axe du tube (10) installé dans une partie supérieure du boîtier, récipient qui est capable d'être pressé en contact étanche et d'être baissé à tel niveau que le récipient collecteur (2), ensemble avec le noyau diviseur (11), peut être retiré en passant sous l'extrémité de sortie du tube (10) et être sorti du boîtier (1).

10.  Dispositif selon la revendication 4, **caractérisé** en ce que
le noyau diviseur (11) est mis en place sur un récipient collecteur (2), et en ce que le tube (10), ensemble avec une unité d'entraînement, de commande et d'amenée d'échantillon, est mis en place dans une position centrée sur le noyau diviseur (11).

11.  Dispositif selon la revendication 1, **caractérisé** en ce que
une trémie d'alimentation (7) est montée stationnaire sur un boîtier (1), au-dessus du tube (10).

12.  Dispositif selon la revendication 1, **caractérisé** en ce que
la couronne de cases (12) comprend jusqu'à 32 cases.

Fig. 1

Fig. 1a

16

9

8

10

1a

19

11

18

11b    13    11a    12    2

Fig. 2

13a    10

11b    11a

13

3a    3a

20

13b

14

13b    20

Fig. 3

Fig. 3a

Fig. 4

Fig. 4a

Fig. 5a

Fig. 5

Fig. 6a

13b  13

11

12

Fig. 6

13c

13

12

11

Fig. 7

14

Fig. 8

Fig. 9